# EUROPÄISCHE PATENTSCHRIFT

(11) **EP 2 765 847 B1**
(45) Veröffentlichungstag und Bekanntmachung des Hinweises auf die Patenterteilung: **03.01.2018**
(21) Anmeldenummer: 12780137.1
(22) Anmeldetag: 11.10.2012
(51) Int. Cl.: A01D 43/08

(54) **FÖRDERBEREICHSBEGRENZUNG FÜR EINE LANDWIRTSCHAFTLICHE ERNTEMASCHINE, INSBESONDERE EINEN FELDHÄCKSLER**
CONVEYOR REGION BORDER FOR AN AGRICULTURAL HARVESTER, IN PARTICULAR A FORAGE HARVESTER
ÉLÉMENT DE DÉLIMITATION DE LA ZONE DE TRANSFERT DANS UNE MACHINE AGRICOLE, EN PARTICULIER UNE RÉCOLTEUSE-HACHEUSE

(30) Priorität: 12.10.2011 DE 102011054428
(43) Veröffentlichungstag der Anmeldung: 20.08.2014
(73) Patentinhaber: Betek GmbH & Co. KG, 78733 Aichhalden (DE)
(72) Erfinder: DETEMPLE, Pascal, 78727 Oberndorf (DE); SMEETS, Florian, 72270 Baiersbronn (DE)
(74) Vertreter: Herrmann, Jochen
(86) Internationale Anmeldenummer: PCT/EP2012/070189
(87) Internationale Veröffentlichungsnummer: WO 2013/053841

(56) Entgegenhaltungen:
- DE-A1- 19 641 211
- DE-A1-102010 004 648
- US-A- 4 641 864
- US-A- 4 964 502
- US-A- 5 009 552
- US-B1- 6 327 970

## Beschreibung

Die Erfindung betrifft eine Förderbereichsbegrenzung für eine landwirtschaftliche Erntemaschine, insbesondere einen Feldhäcksler, mit einer Förderfläche.

Aus der DE 10 2010 004 648 A1 ist ein Feldhäcksler bekannt, der im Anschluss an ein Vorsatzgerät eine motorbetriebene Häckseltrommel aufweist. Die Häckseltrommel ist umfangsseitig mit Messern bestückt. Die Messer arbeiten mit einer Gegenschneide zusammen. Über das Vorsatzgerät wird das zu erntende Gut (beispielsweise Mais) zugeführt und von einem Einzugsorgan der Häckseltrommel zugeführt. Die Kompressionsrollen dieses Einzugsorgans komprimieren das geschnittene Erntegut und führen es sukzessive der Häckseltrommel zu. Die Messer schneiden in Zusammenarbeit mit der Gegenschneide von dem komprimierten Feldgut Stücke in der gewünschten Häckselgröße ab. Der Häckseltrommel ist ein Reibboden als Förderbereichsbegrenzung zugeordnet. Das geschnittene Häckselmaterial wird mittels der Messer über den Reibboden transportiert. Im Anschluss an den Reibboden kann beispielsweise auch noch eine Reibleiste angeordnet sein, die einen Stufensprung zwischen dem Reibboden und der Reibleiste bildet. An der Reibleiste wird das Häckselgut bedarfsweise von den Messern weiter zerkleinert. Im Anschluss an die Häckseltrommel gelangt das Häckselmaterial in einen aufsteigenden Auswurfschacht und kann anschließend über eine Konditioniereinrichtung und einen Nachbeschleuniger in den Auswurfschacht ausgegeben werden. Der Reibboden, der als Förderbereichsbegrenzung dient, unterliegt einem starken Verschleiß, denn hier wird das geschnittene Häckselgut in stark komprimierter Form über die Förderfläche des Reibbodens transportiert. Der Verschleiß wird durch an dem Erntegut anhaftendes Bodenmaterial, beispielsweise Sand, noch verstärkt. Weitere Feldhäcksler sind auch in den Dokumenten DE 196 41 211 A1 und DE 10 2010 004 648 A1 beschrieben.

Aus US 6,327,970 B1 ist eine Schneidplatte für eine landwirtschaftliche Erntemaschine bekannt. Auf der bogenförmigen Oberfläche der Schneidplatte sind Schneidelemente aufgebracht. Dabei sind die Schneidelemente in drei Reihen angeordnet. Die Reihen sind in Förderrichtung hintereinandergestellt. In jeder Reihe sind die Schneidelemente zueinander in gleicher Teilung beabstandet angeordnet. Die Schneidelemente besitzen eine vorderseitige Schneidkante um Getreidespelzen, die sich an den Schneidelementen vorbeibewegen, aufzuschneiden.

Es ist Aufgabe der Erfindung, die Förderbereichsbegrenzung für eine landwirtschaftliche Erntemaschine, insbesondere einen Feldhäcksler, effektiv vor Verschleiß zu schützen.

Diese Aufgabe wird dadurch gelöst, dass auf der Förderfläche Verschleißschutzelemente zueinander beabstandet angeordnet sind, und dass die Verschleißschutzelemente einen mit der Förderfläche verbundenen Tragteil und ein mit dem Tragteil mittelbar oder unmittelbar verbundenes Hartstoff-Element aufweisen.

Zwischen den Verschleißschutzelementen werden Abstandsbereiche gebildet, in die sich Erntematerial hinein verdichtet. Das Abfließen des Erntematerials in Richtung des Förderstromes wird mit den Verschleißschutzelementen verhindert. Damit bildet sich eine Schicht, die als natürlicher Verschleißschutz dient und die Förderfläche schützt. Die Verschleißschutzelemente selbst weisen ein Hartstoff-Element auf, das auch bei starker abrasiver Beanspruchung nur einem geringen Verschleiß unterliegt. Damit bleiben diese Verankerungspunkte für die Verschleißschutzschicht aus Erntegut dauerhaft erhalten. Die Verschleißschutzelemente weisen weiterhin ein Tragteil auf, das mit dem Hartstoff-Element verbunden ist. Dieses Tragteil besteht vorzugweise aus einem gut schweißbaren Material und wird daher vorzugsweise mit der Förderfläche verschweißt.

Wenn die Verschleißschutzelemente abgearbeitet sind, können sie von der Förderfläche getrennt und neue Verschleißschutzelemente aufgesetzt, beispielweise aufgeschweißt, werden.

Um ein gleichmäßiges Verschleißverhalten zu erreichen, kann es nach einer Erfindungsvariante vorgesehen sein, dass die Verschleißschutzelemente zumindest bereichsweise auf der Förderfläche im Teilungsraster mit gleichem Teilungsabstand zueinander beabstandet angeordnet sind. Durch diese Maßnahme wird auch der gleichmäßige Materialfluss nicht beeinträchtigt.

Es hat sich gezeigt, dass insbesondere für die Ernte üblicher Feldfrüchte wie Mais etc. ein Teilungsabstand zwischen den Verschleißschutzelementen im Bereich zwischen 5 mm und 70 mm eine gute Förderwirkung unterstützt.

Eine denkbare Erfindungsvariante ist dergestalt, dass die Verschleißschutzelemente zumindest bereichsweise in Reihen angeordnet sind, und dass die Reihen zueinander beabstandet angeordnet sind. Diese beispielsweise parallel beabstandete Anordnung der Reihen kann einfach montiert werden.

Besonders bevorzugt sind die Verschleißschutzelemente zumindest zweier benachbarter Reihen zumindest teilweise gegeneinander versetzt angeordnet. Dann stellen die Verschleißschutzelemente dem Fördergut Hindernisse entgegen, und die Zwischenräume zwischen den Verschleißschutzelementen setzen sich schnell und effektiv zu. Die Hindernisse dienen auch zum besseren Aufbrechen des gehäckselten Erntegutes. Damit verbessert sich die Qualität für die Fütterung bzw. beim Prozess zur Herstellung von Biogas.

Besonders gute Ergebnisse werden dabei dann erreicht, wenn die Verschleißschutzelemente zueinander um den halben Teilungsabstand versetzt angeordnet sind.

Vorteilhafterweise sind die Reihen der Verschleißschutzelemente quer, insbesondere senkrecht, zur Förderrichtung ausgerichtet. Hierdurch wird erreicht, dass keine Querkraftkomponente während der Förderung in das Fördergut eingebracht wird.

Es hat sich gezeigt, dass ein effektiver Verschleißschutz und gute Aufbrecheigenschaften dann erreicht werden kann, wenn vorgesehen ist, dass das Hartstoff-Element mindestens 10 mm und maximal 18 mm über die Förderfläche vorsteht. Der Mindestüberstand garantiert eine ausreichende Verschleißlänge. Der maximale Überstand des Hartstoff-Elementes verhindert eine zu starke Beanspruchung der Verbindungsstelle zwischen Förderfläche und Verschleißschutzelement.

Eine denkbare Erfindungsvariante kann dergestalt sein, dass das Tragteil eine eingetiefte Aufnahme für das Hartstoff-Element aufweist, die zumindest bereichsweise mit einem Mantelteil das Hartstoff-Element umläuft.

Erfindungsgemäß ist das Tragteil mit einem Basisteil auf der Förderfläche verschweißt, und es ist im Übergangsbereich zwischen dem Basisteil und der Förderfläche zumindest bereichsweise ein wulstförmiger Schweißbereich vorgesehen, der insbesondere ringförmig umlaufend ausgebildet sein kann. Der Schweißbereich schützt das Basisteil vor Auswaschung, sodass durch diese Maßnahme eine einfache Standzeitverlängerung erreicht ist.

Es hat sich gezeigt, dass besonders konkav ausgebildete Förderflächen effektiv mit den Verschleißschutzelementen geschützt werden können. Bei dieser Förderflächenform entstehen insbesondere bei der Verwendung der Förderbereichsbegrenzung als Reibboden in einem Feldhäcksler im Erntegut Radialkraftkomponenten, die ein effektives Zusetzen der Zwischenräume zwischen den Verschleißschutzelementen begünstigt. Hierdurch kann eine hohe Kompressionsrate im Erntegut unterstützt werden. Die konkave Förderfläche kann dabei kontinuierlich oder diskontinuierlich ausgebildet sein.

Denkbar ist es, dass die Förderfläche aus streifenförmigen Segmentabschnitten zusammengesetzt ist, die zueinander im Winkel angeordnet sind. Diese segmentförmige konkave Förderfläche zeichnet sich insbesondere durch hohe Steifigkeitseigenschaften aus.

Es kann dabei auch vorgesehen sein, dass jeder Segmentabschnitt eine oder mehrere Reihen von Verschleißschutzelementen trägt, um eine einfache Montage der Verschleißschutzelemente zu ermöglichen. Es hat sich auch gezeigt, dass auf den streifenförmigen Segmentabschnitten eine haltbare Schweißverbindung zwischen den Verschleißschutzelementen und der Förderfläche hergestellt werden kann.

Die Erfindung wird im Folgenden anhand eines in den Zeichnungen dargestellten Ausführungsbeispieles näher erläutert. Es zeigen:
- Figur 1: einen Reibboden für einen Feldhäcksler in Draufsicht;
- Figur 2: den Reibboden gemäß Figur 1 in Ansicht von vorne;
- Figur 3: den in Figur 1 mit III-III markierten Schnittverlauf; und
- Figur 4: ein in Figur 1 mit IV markiertes Detail im vergrößerten Maßstab.

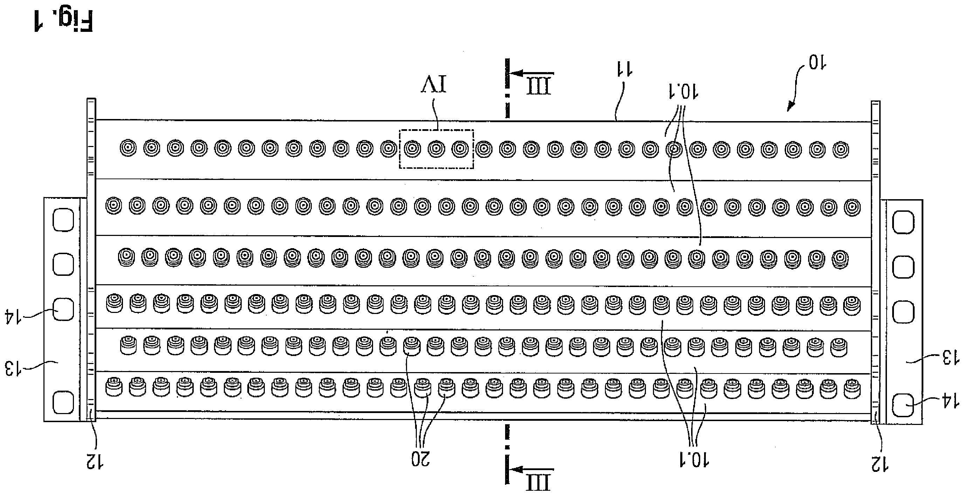

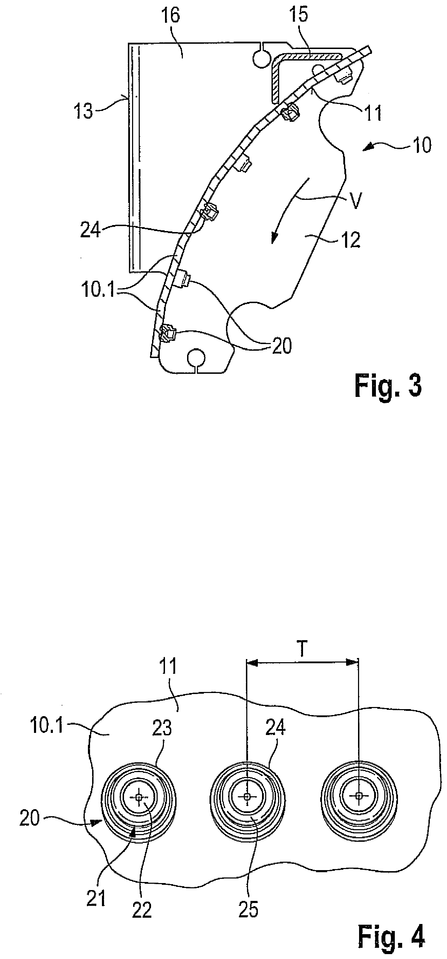

Figur 1 zeigt eine Förderbereichsbegrenzung 10, nämlich einen Reibboden, für einen Feldhäcksler. Dieser weist eine konkave Förderfläche 11 auf, die aus sechs Segmentabschnitten gebildet ist. Dabei sind die Segmentabschnitte als streifenförmige Elemente ausgebildet. Wie Figur 3 erkennen lässt, sind dabei die einzelnen Segmentabschnitte gegeneinander abgebogen. Seitlich wird die Förderfläche 11 von zwei Seitenteilen 12 eingefasst. Die Seitenteile 12 begrenzen den Förderweg seitlich.

Zur Montage des Reibbodens im Gehäuse des Feldhäckslers sind Träger 16 mit der Förderbereichsbegrenzung 10 einteilig verbunden. Wie Figuren 1 und 3 zeigen, sind Flansche 13 mit Befestigungsaufnahmen 14 von dem Träger 16 in entgegengesetzte Richtungen abgewinkelt. Zur Aussteifung der Förderfläche 11 können rückseitig Winkelelemente 15 die Förderbereichsbegrenzung 10 hinterlegen.

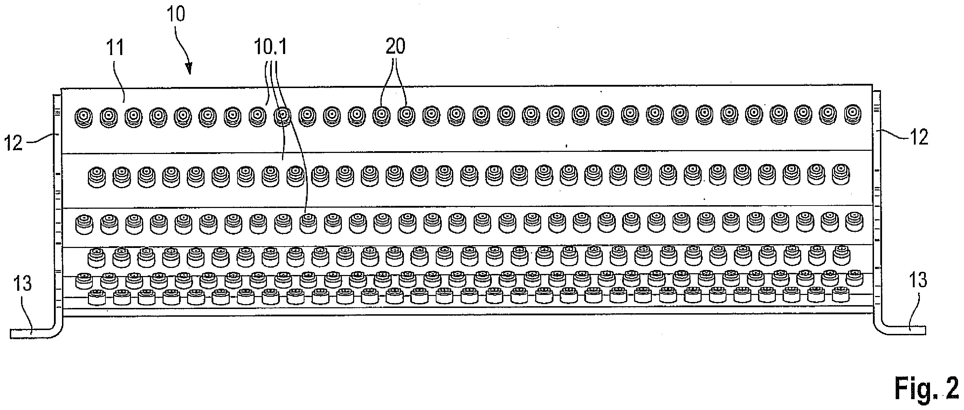

Die Figuren 1 und 2 zeigen die Belegung der Förderfläche 11 mit Verschleißschutzelementen 20. Figur 3 und 4 lassen erkennen, dass die Verschleißschutzelemente 20 einen Tragteil 21 aus einem elektrisch gut leitfähigen und gut schweißbaren Trägermaterial, beispielsweise Stahl, aufweisen. Das Tragteil 21 ist mit einer eingetieften Aufnahme versehen, die ein umlaufendes Mantelteil 25 bildet. In diese Aufnahme ist ein Hartstoff-Element 22, beispielsweise bestehend aus Hartmetall oder Keramik, eingesetzt. Das Hartstoff-Element 22 kann in der Aufnahme stoffschlüssig und/oder formschlüssig und/oder reibschlüssig fixiert sein. Beispielsweise kann es in der Aufnahme verlötet sein. Das Verschleißschutzelement 20 weist ein Basisteil 24 auf, das über eine Schweißverbindung mit der Förderfläche 11 verbunden ist. Dabei ist die Schweißverbindung insbesondere derart ausgeführt, dass das Basisteil 24 ringförmig von einem Schweißbereich 23 umgeben ist. Der Schweißbereich 23 schützt den Übergangsbereich zwischen dem Basisteil 24 und der Förderfläche 11. Zudem ist eine flächige Schweißverbindung zwischen der Unterseite des Verschleißschutzelementes 20 und der Oberseite der Förderfläche 11 vorgesehen. Zur Erzeugung dieser Schweißverbindung können übliche Bolzenschweißverfahren eingesetzt werden.

Figuren 1 und 2 lassen erkennen, dass die Verschleißschutzelemente zueinander beabstandet und in Reihen angeordnet sind. Dabei wird ein gleichmäßiger Teilungsabstand T (siehe Figur 3) zwischen den einzelnen Verschleißschutzelementen 20 eingehalten. Die benachbarten Reihen von Verschleißschutzelementen 20 sind dabei jeweils um die halbe Teilung versetzt angeordnet, wie dies insbesondere die Figur 1 deutlich erkennen lässt.

Während des Ernteeinsatzes wird das Häckselgut in Vorschubrichtung V (siehe Figur 3) über die Förderfläche 11 geleitet. Das faserige Häckselgut setzt sich in den Bereichen zwischen den Verschleißschutzelementen 20 fest, und verdichtet sich in den Abstandsbereichen. Auf diese Weise wird eine flächige Zusetzung der Förderfläche 11 mit Häckselmaterial erreicht. Dieses bildet dann einen natürlichen Verschleißschutz.

## Patentansprüche

1. Förderbereichsbegrenzung für eine landwirtschaftliche Erntemaschine, insbesondere einen Feldhäcksler, mit einer Förderfläche (11),
**dadurch gekennzeichnet,**
**dass** auf der Förderfläche (11) Verschleißschutzelemente (20) zueinander beabstandet angeordnet sind, und
**dass** die Verschleißschutzelemente (20) einen mit der Förderfläche (11) verbundenen Tragteil (21) und ein mit dem Tragteil (21) mittelbar oder unmittelbar verbundenes Hartstoff-Element (22) aufweisen,
**dass** das Tragteil (21) mit einem Basisteil (24) auf der Förderfläche (11) verschweißt ist,
**dass** der Übergangsbereich zwischen dem Basisteil (24) und der Förderfläche (11) zumindest bereichsweise von einem wulstförmigen Schweißbereich (23) überdeckt ist,
und **dass** zwischen der Unterseite des Verschleißschutzelementes (20) und der Oberseite der Förderfläche (11) eine flächige Schweißverbindung vorgesehen ist.

2. Förderbereichsbegrenzung nach Anspruch 1,
**dadurch gekennzeichnet,**
**dass** die Verschleißschutzelemente (20) zumindest bereichsweise auf der Förderfläche (11) im Teilungsraster mit gleichem Teilungsabstand (T) angeordnet sind.

3. Förderbereichsbegrenzung nach Anspruch 2,
**dadurch gekennzeichnet,**
**dass** der Teilungsabstand (T) im Bereich zwischen 5 mm und 70 mm gewählt ist.

4. Förderbereichsbegrenzung nach einem der Ansprüche 1 bis 3,
**dadurch gekennzeichnet,**
**dass** die Verschleißschutzelemente (20) zumindest bereichsweise in Reihen angeordnet sind, und
**dass** die Reihen zueinander beabstandet angeordnet sind.

5. Förderbereichsbegrenzung nach Anspruch 4,
**dadurch gekennzeichnet,**
**dass** die Verschleißschutzelemente (20) zumindest zweier benachbarter Reihen zumindest teilweise gegeneinander versetzt angeordnet sind.

6. Förderbereichsbegrenzung nach Anspruch 5,
**dadurch gekennzeichnet,**
**dass** die Verschleißschutzelemente (20) zueinander um den halben Teilungsabstand (T) versetzt angeordnet sind.

7. Förderbereichsbegrenzung nach einem der Ansprüche 4 bis 6,
**dadurch gekennzeichnet,**
**dass** die Reihen der Verschleißschutzelemente (20) quer zur Förderrichtung ausgerichtet sind.

8. Förderbereichsbegrenzung nach einem der Ansprüche 1 bis 7,
**dadurch gekennzeichnet,**
**dass** das Hartstoff-Element (22) mindestens 10 mm und/oder maximal 18 mm über die Förderfläche (21) vorsteht.

9. Förderbereichsbegrenzung nach einem der Ansprüche 1 bis 8,
**dadurch gekennzeichnet,**
**dass** das Tragteil (21) eine eingetiefte Aufnahme für das Hartstoff-Element (22) aufweist, die zumindest bereichsweise mit einem Mantelteil (25) das Hartstoff-Element (22) umläuft.

10. Förderbereichsbegrenzung nach einem der Ansprüche 1 bis 9,
**dadurch gekennzeichnet,**
**dass** die Förderfläche (11) konkav ausgebildet ist.

11. Förderbereichsbegrenzung nach Anspruch 10,
**dadurch gekennzeichnet,**
**dass** die Förderfläche (11) aus streifenförmigen Segmentabschnitten (10.1) zusammengesetzt ist, die zueinander im Winkel angeordnet sind.

12. Förderbereichsbegrenzung nach Anspruch 11,
**dadurch gekennzeichnet,**
**dass** jeder Segmentabschnitt (10.1) eine oder mehrere Reihen von Verschleißschutzelementen (20) trägt.

## Claims

1. A conveyor region border for an agricultural harvester, in particular a forage harvester, comprising a conveyor surface (11),
**characterised in that**
wear protection elements (20) are arranged on the conveyor surface (11) in a mutually spaced manner, and
the wear protection elements (20) comprise a support part (21) connected to the conveyor surface (11) and a hard-material element (22) directly or indirectly connected to the support part (21),
**in that** the support part (21) is welded to a base part (24) on the conveyor surface (11),
**In that** the transition region between the base part (24) and the conveyor surface (11) is covered, at least in regions, by a bead -shaped welding region (23),
and **in that** a flat welding connection is provided between the bottom of the wear protection element (20) and the top of the conveyor surface (11).

2. The conveyor region border according to claim 1,
**characterised in that**
the wear protection elements (20) are arranged, at least in regions on the conveyor surface (11), in the separation grid with equal separation distances (T).

3. The conveyor region border according to claim 2, **characterised in that**
the separation distance (T) is selected in the range between 5 mm and 70 mm.

4. The conveyor region border according to one of claims 1 to 3,
**characterised in that**
the wear protection elements (20) are arranged, at least in regions, in rows, and
**in that** the rows are arranged spaced apart from each other.

5. The conveyor region border according to claim 4,
**characterised in that**
the wear protection elements (20) of at least two adjacent rows are arranged, at least in part, offset from one another.

6. The conveyor region border according to claim 5,
**characterised in that**
the wear protection elements (20) are arranged offset to one another by half the separation distance (T).

7. The conveyor region border according to one of claims 4 to 6,
**characterised in that**
the rows of the wear protection elements (20) are aligned transverse to the conveying direction.

8. The conveyor region border according to one of claims 1 to 7,
**characterised in that**
the hard material element (22) projects by at least 10 mm and/or at most 18 mm above the conveyor surface (21).

9. The conveyor region border according to one of claims 1 to 8,
**characterised in that**
the support part (21) comprises a recessed receptacle for the hard material element (22) which, at least in regions, encircles the hard material element (22) with a jacket part (25).

10. The conveyor region border according to one of claims 1 to 9,
**characterised in that**
the conveyor surface (11) is concave shaped.

11. The conveyor region border according to claim 10,
**characterised in that**
the conveyor surface (11) is assembled from strip-shaped segment sections (10.1), arranged at an angle to one another.

12. The conveyor region border according to claim 11,
**characterised in that**
each segment section (10.1) supports one or more rows of wear protection elements (20).

## Revendications

1. Élément de délimitation de zone de transport pour une machine de récolte agricole, en particulier une récolteuse-hacheuse, comprenant une surface de transport (11),
**caractérisé en ce**
**que** sur la surface de transport (11) sont disposés des éléments de protection contre l'usure (20) éloignés les uns des autres, et
en ce que les éléments de protection contre l'usure (20) présentent une partie de support (21) reliée à la surface de transport (11) et un élément (22) en matériau dur relié directement ou indirectement à la partie de support (21),
en ce que la partie de support (21) est soudée à une partie de base (24) sur la surface de transport (11),
en ce que la zone de transfert entre la partie de base (24) et la surface de transport (11) est recouverte au moins à certains endroits par une zone de soudure (23) en forme de bourrelet,
et en ce qu'entre la face inférieure de l'élément de protection contre l'usure (20) et la face supérieure de la surface de transport (11) est prévue une liaison soudée plate.

2. Élément de limitation de zone de transport selon la revendication 1,
**caractérisé en ce**
**que** les éléments de protection de soudure (20) sont disposés au moins à certains endroits sur la surface de transport (11) sur une grille de séparation ayant une même distance de séparation (T).

3. Élément de limitation de zone de transport selon la revendication 2, **caractérisé en ce que** la distance de séparation (T) est sélectionnée dans une plage entre 5 mm et 70 mm.

4. Élément de limitation de zone de transport selon l'une des revendications 1 à 3,
**caractérisé en ce**
**que** les éléments de protection de soudure (20) sont disposés au moins à certains endroits en rangées, et
en ce que les rangées sont disposées éloignées les unes des autres.

5. Élément de limitation de zone de transport selon la revendication 4,
**caractérisé en ce**
**que** les éléments de protection de soudure (20) sont disposées au moins en deux rangées adjacentes au moins à certains endroits décalés les uns par rapport aux autres.

6. Élément de limitation de zone de transport selon la revendication 5,
**caractérisé en ce**
**que** les éléments de protection de soudure (20) sont décalés les uns par rapport aux autres sur la moitié de la distance (T) de séparation.

7. Élément de limitation de zone de transport selon l'une des revendications 4 à 6,
**caractérisé en ce**
**que** les rangées des éléments de protection de soudure (20) sont alignés perpendiculairement à la direction de transport.

8. Élément de limitation de zone de transport selon l'une des revendications 1 à 7,
**caractérisé en ce**
**que** l'élément (22) en matériau dur fait saillie au moins de 10 mm et/ou 18 mm sur la surface de transport (21).

9. Élément de limitation de zone de transport selon l'une des revendications 1 à 8,
**caractérisé en ce**
**que** la partie de support (21) présente un logement monté en retrait destiné à l'élément (22) en matériau dur qui entoure au moins à certains endroits l'élément (22) en matériau dur à l'aide d'une partie (25) d'enveloppe.

10. Élément de limitation de zone de transport selon l'une des revendications 1 à 9,
**caractérisé en ce**
**que** la surface de transport (11) est concave.

11. Élément de limitation de zone de transport selon la revendication 10,
**caractérisé en ce**
**que** la surface de transport (11) est composée de sections (10.1) de segment en forme de bande.

12. Élément de limitation de zone de transport selon la revendication 11,
**caractérisé en ce**
**que** chaque section (10.1) de segment porte une ou plusieurs rangées d'éléments de protection contre l'usure (20).
